# EUROPEAN PATENT APPLICATION

(11) **EP 4 379 982 A1**
(43) Date of publication of application: **05.06.2024**
(21) Application number: 22210898.7
(22) Date of filing: 01.12.2022
(51) Int. Cl.: H02B 13/045, H01H 33/56

(54) **A SWITCHGEAR TANK**

(71) Applicant: ABB SCHWEIZ AG, 5400 Baden (CH)
(72) Inventor: GENTSCH, Dietmar, 40882 Ratingen (DE); JAVORA, Radek, 664 62 Hrusovany u Brna (CZ); SKUCI, Michal, 602 00 Brno (CZ)
(74) Representative: Maiwald GmbH

(57) **Abstract**

The present invention relates to a switchgear tank (1), comprising:
- one or more centre body parts (2);
- a first end cap (3); and
- a second end cap (4);
wherein the one or more centre body parts are formed from one or more bent metal sheets;
wherein the first end cap is connected to at least one centre body part of the one or more centre body parts at a first axial position;
wherein the second end cap is connected to at least one centre body part of the one or more centre body parts at a second axial position; and
wherein each of the one or more centre body parts comprises at least partly cylindrical shape.

## Description

### FIELD OF THE INVENTION

The present invention relates to a switchgear tank.

### BACKGROUND OF THE INVENTION

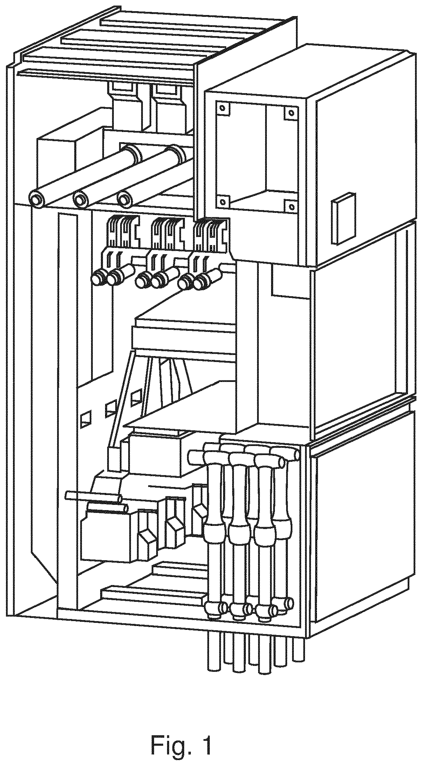

Conventional gas insulated medium voltage switchgear designs have block or cube designs with flat walls welded together or assembled. Such a design is especially suitable for easy assembly of internal parts and assembly of certain set of panels to each other. An example of such a switchgear design is shown in Fig. 1, that shows a conventional design of gas insulated medium voltage switchgear with a compartment or tank with flat mainly sheet metal walls.

In the situation where there is a necessity to increase the internal pressure within the compartment or tank, due to for example the type of insulation medium used, the flat wall design of the pressurized tank (Quader/rectangular) requires very thick walls of metal sheets in order to fulfill the mechanical stresses exerted to these walls. This leads to increased raw material consumption, higher weight and thus higher costs.

Alternative, conventional switchgear designs used in high voltage applications can have a conventional design of gas insulated high voltage switchgear with cast aluminium body, utilize cast metal (usually aluminium alloys) tubes that are already optimized and designed for high pressure, but its production process and tools are quite complex and expensive.

There is a need to address these issues.

### SUMMARY OF THE INVENTION

Therefore, it would be advantageous to have an improved compartment or tank design for a switchgear.

The object of the present invention is solved with the subject matter of the independent claims, wherein further embodiments are incorporated in the dependent claims.

In an aspect, there is provided a switchgear tank, comprising:
- one or more centre body parts;
- a first end cap; and
- a second end cap.

The one or more centre body parts are formed from one or more bent metal sheets. The first end cap is connected to at least one centre body part of the one or more centre body parts at a first axial position. The second end cap is connected to at least one centre body part of the one or more centre body parts at a second axial position. Each of the one or more centre body parts comprises a cylindrical shape.

In this manner, by having cylindrical walls the tank can withstand mechanical forces resulting from internal overpressures, with thinner walls than conventional switchgear compartments, providing a low-cost design.

In an example, the first end cap has a partly spherical or ovoid shape; and/or wherein the second end cap has a partly spherical or ovoid shape.

By having partly spherical or ovoid shapes, the end caps can withstand increased pressure with respect to flat end caps leading to a reduction in thickness, and reduction in cost.

In an example, the tank comprises one or more coupling parts. The one or more coupling parts are connected to the one or more centre body parts and/or the first end cap and/or the second end cap. Each coupling part surrounds an opening in the centre body part to which it is connected or an opening in the first end cap to which it is connected or an opening in the second end cap to which it is connected.

In an example, each of the one or more coupling parts comprises a flat portion.

In an example, at least one of the one or more coupling parts is configured for connection to a bushing and/or at least one of the one or more coupling parts is configured for connection to an actuator.

Appropriate coupling parts, provided as small as required, enables cables to enter the tank and provides for actuation of devices within the tank, without compromising to any great extent the overall pressure capability of the design.

In an example, the first end cap comprises an end flange. The at least one centre body part to which the first end cap is connected comprises an end flange. The end flange of the first end cap is connected to the end flange of the at least one centre body part.

In an example, the second end cap comprises an end flange. The at least one centre body part to which the second end cap is connected comprises an end flange. The end flange of the second end cap is connected to the end flange of the at least one centre body part.

By having end caps with flanges and the main tank elements with flanges, mechanical rigidity is increased, enabling the wall thicknesses to be reduced or the pressure capability to be increased for a set wall thickness.

In an example, the at least one centre body part to which the first end cap is connected is the same at least one centre body part to which the second end cap is connected.

In an example, the one or more centre body parts comprises a plurality of centre body parts. The at least one centre body part to which the first end cap is connected is connected to the at least one centre body part to which the second end cap is connected.

In an example, the one or more centre body parts comprises a plurality of centre body parts. The at least one centre body part to which the first end cap is connected comprises a second end flange at an opposite end to the of the at least one centre body part to the first end flange. The second end flange is connected to an end flange of an adjacent at least one centre body part of the one or more centre body parts. The adjacent at least one centre body part is different to the at least one centre body part to which the second end cap is connected.

In an example, the one or more centre body parts comprises a plurality of centre body parts. The at least one centre body part to which the second end cap is connected comprises a second end flange at an opposite end to the of the at least one centre body part to the first end flange. The second end flange is connected to an end flange of an adjacent at least one centre body part of the one or more centre body parts. The adjacent at least one centre body part is different to the at least one centre body part to which the first end cap is connected.

In an example, the adjacent at least one centre body part is connected to the at least one centre body part to which the first end cap is connected and is connected to the at least one centre body part to which the second end cap is connected.

In an example, the adjacent at least one centre body part connected to the at least one centre body part to which the first end cap is connected comprises three centre body parts laterally displaced from one another and each extending from the at least one centre body part to which the first end cap is connected to the second axial position or each extending from the at least one centre body part to which the first end cap is connected to an adjacent at least one centre body part.

In an example, the at least one centre body part to which the first end cap is connected comprises three centre body parts laterally displaced from one another and each extending from the first axial position to the second axial position or each extending from the first axial position to an axial position between the first axial position and the second axial position. Alternatively, or additionally, the at least one centre body part to which the second end cap is connected comprises three centre body parts laterally displaced from one another and each extending from the second axial position to the first axial position or each extending from the second axial position to an axial position between the first axial position and the second axial position.

Thus, there can be one body part between the end caps, or two body parts between the end caps connected end to end, or three body parts between the end caps connected end to end. There can be three body parts connected between the end caps that are each in parallel to each other. There can be a single body part connected to an end cap that is itself connected to three body parts in parallel that are connected to the other end cap. There can be three body parts in parallel connected to an end cap that are connected to another three body parts in parallel that are connected to the other end cap. There can be a single body part connected to an end cap that is itself connected to three body parts in parallel that are connected to another single body part that is connected to the other end cap. There can be a single body part connected to an end cap that is itself connected another single body part that is itself connected to three body parts in parallel that are connected to the other end cap. There can be a single body part connected to an end cap that is itself connected to three body parts in parallel that are connected to another three body parts in parallel that are connected to the other end cap. There can be three body parts in parallel that are connected to an end cap that are connected to another three body parts in parallel that are connected to another three body parts in parallel that are connected to the other end cap.

In an example, the tank comprises an outer reinforcement layer.

In an example, the connection and volume to the vacuum interrupter devices is sealed that the bellows will stay under atmosphere outside pressure

In an example, the seal area will be connection at the bellows and seal to the surroundings that pushrod stays under gas pressure with higher dielectric performance.

The above aspect and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a conventional design of gas insulated medium voltage switchgear with flat walls.
Fig. 2 shows examples of the pressures and forces the new tank design copes with.
Fig. 3 shows an example of the new tank showing a cylindrical shape of pressure tank used for gas insulated switchgear.
Fig. 4 shows an additional layer of composite applied over the new gas tank for additional mechanical reinforcement.
Fig. 5 shows the new thin-walled pressure tank with two sections assembled by flanges.
Fig. 6 shows the new thin-walled pressure tank with three sections assembled by flanges.
Fig. 7 shows the new thin-walled pressure tank with three sections assembled by flanges, where the middle section consists of three thin-walled pressure tanks: and
Fig. 8 shows the new thin-walled pressure tank with three sections assembled by flanges in a different configuration.

### DETAILED DESCRIPTION OF EMBODIMENTS

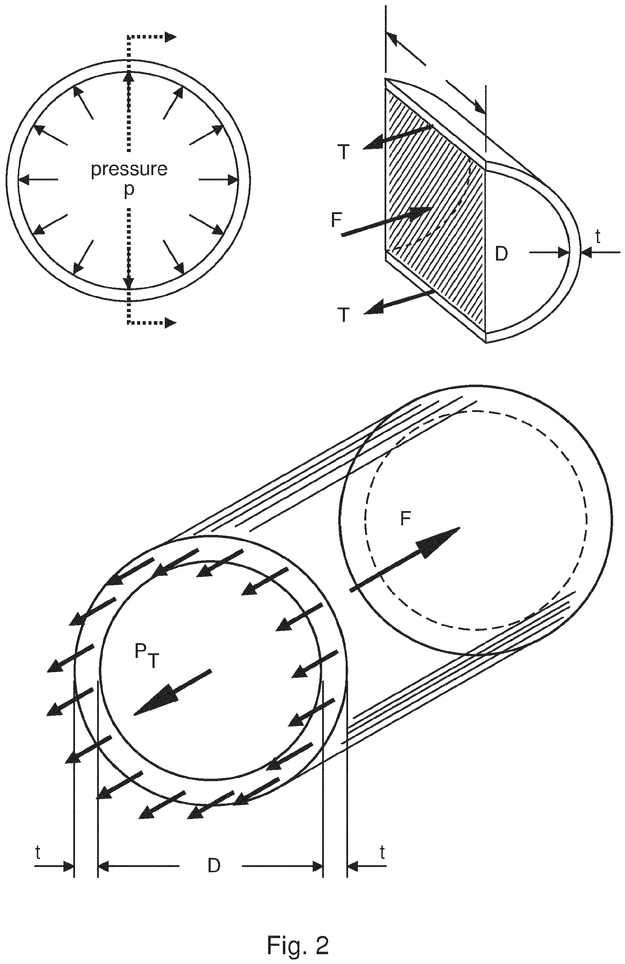

Figs. 2-8 relate to a new switchgear tank, for example for a low voltage, medium voltage, or high voltage switchgear.

The switchgear tank 1 comprises one or more centre body parts 2, a first end cap 3, and a second end cap 4. The one or more centre body parts are formed from one or more bent metal sheets. The first end cap is connected to at least one centre body part of the one or more centre body parts at a first axial position. The second end cap is connected to at least one centre body part of the one or more centre body parts at a second axial position. Each of the one or more centre body parts comprises a cylindrical shape.

In this manner, by having cylindrical walls the tank can withstand mechanical forces resulting from internal overpressures, with thinner walls than conventional switchgear compartments, providing a low-cost design.

In an example, the one or more bent metal sheets have end sections welded to each other.

In an example, the first end cap has a partly spherical or ovoid shape.

In an example, the second end cap has a partly spherical or ovoid shape

By having partly spherical or ovoid shapes, the end caps can withstand increased pressure with respect to flat end caps leading to a reduction in thickness, and reduction in cost.

In an example, the tank comprises one or more coupling parts 5, 6, 7. The one or more coupling parts are connected to the one or more centre body parts and/or the one or more coupling parts are connected to the first end cap and/or the one or more coupling parts are connected to the second end cap. Each coupling part surrounds an opening in the centre body part to which it is connected or surrounds an opening in the first end cap to which it is connected or surrounds an opening in the second end cap to which it is connected.

In an example, each of the one or more coupling parts comprises a flat portion.

In an example, at least one of the one or more coupling parts is configured for connection to at least one bushing 8, 9. Additionally or alternatively at least one of the one or more coupling parts is configured for connection to an actuator 10.

Thus, the exemplar figures show that each coupling part has a single bushing. However, a design can be provided where one single bigger coupling part is able to accommodate 3 bushings (for 3 phases), providing a bigger, but single, flat area in the body part(s).

Similarly, for an actuator, the coupling part can accommodate a single rod coming from an actuator, but there could also be three rods coming from the actuator each operating a vacuum interrupter of a single phase.

Appropriate coupling parts, provided as small as required, enables cables to enter the tank and provides for actuation of devices within the tank, without compromising to a great extent the overall pressure capability of the design.

In an example, the first end cap comprises an end flange 30. The at least one centre body part to which the first end cap is connected comprises an end flange 30. The end flange of the first end cap is connected to the end flange of the at least one centre body part.

In an example, the second end cap comprises an end flange 30. The at least one centre body part to which the second end cap is connected comprises an end flange 30. The end flange of the second end cap is connected to the end flange of the at least one centre body part.

By having end caps with flanges and the main tank elements with flanges, mechanical rigidity is increased, enabling the wall thicknesses to be reduced or the pressure capability to be increased for a set wall thickness.

In an example, the at least one centre body part to which the first end cap is connected is the same at least one centre body part to which the second end cap is connected.

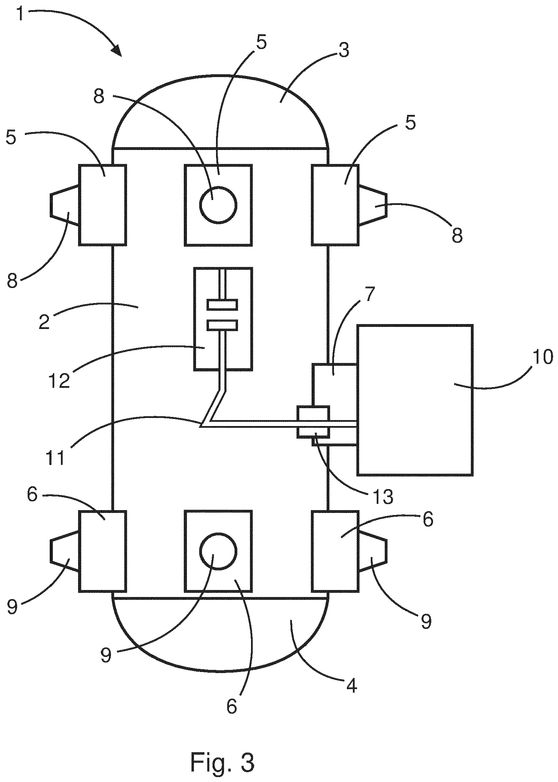

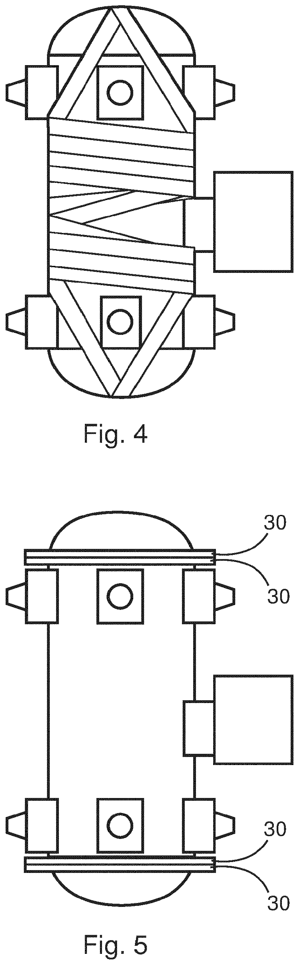

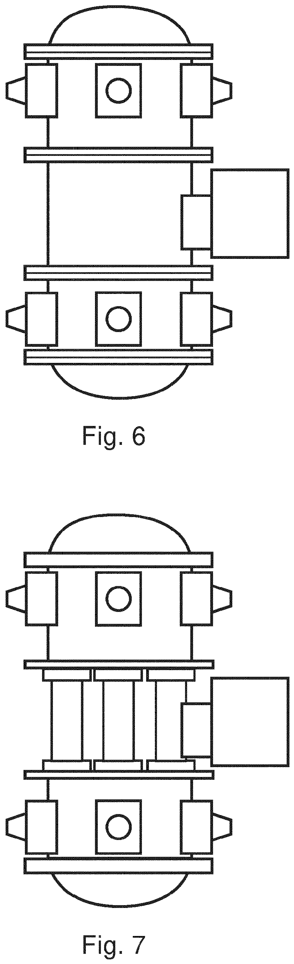

An example of this design is shown in Fig. 3 and Fig. 5, however as show in Fig. 7 there could be a plurality of centre body parts in parallel.

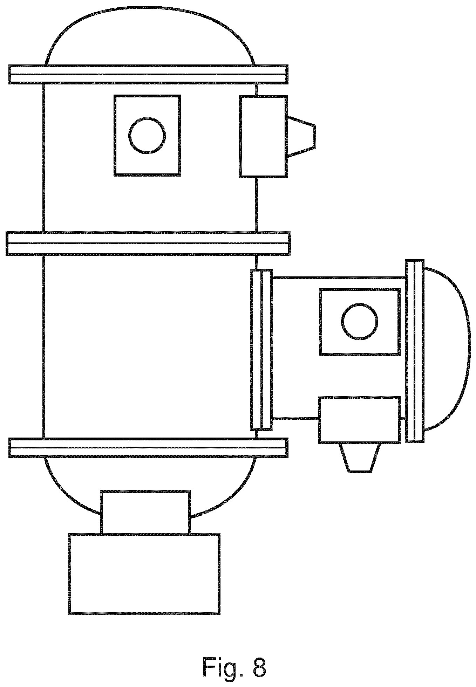

In an example, the one or more centre body parts comprises a plurality of centre body parts. The at least one centre body part to which the first end cap is connected is connected to the at least one centre body part to which the second end cap is connected. An example of this design is shown in Fig. 8, however as show in Fig. 7 there could be a plurality of centre body parts in parallel for example for the top centre body part as shown in Fig. 8. The connection and volume to the vacuum interrupter devices can be sealed in such a way that the bellows will or can stay under atmosphere pressure (a connection to the environment can be given) and the needed insulation to the breaker mechanism made and provided by a pushrod, for sure has to be longer compared to pushrod assembled in pressured gas. The other opportunity is to seal only the connection at the bellows and seal to the surroundings that pushrod stays under gas pressure with higher dielectric performance.

In an example, the one or more centre body parts comprises a plurality of centre body parts, wherein the at least one centre body part to which the first end cap is connected comprises a second end flange at an opposite end to the of the at least one centre body part to the first end flange. The second end flange is connected to an end flange of an adjacent at least one centre body part of the one or more centre body parts. The adjacent at least one centre body part is different to the at least one centre body part to which the second end cap is connected. An example of such a design in shown in Fig. 6 and Fig. 7. However, rather than three sets of centre body parts, there could be four sets or more.

In an example, the one or more centre body parts comprises a plurality of centre body parts, wherein the at least one centre body part to which the second end cap is connected comprises a second end flange at an opposite end to the of the at least one centre body part to the first end flange. The second end flange is connected to an end flange of an adjacent at least one centre body part of the one or more centre body parts. The adjacent at least one centre body part is different to the at least one centre body part to which the first end cap is connected. An example of such a design in shown in Fig. 6 and Fig. 7. However, rather than three sets of centre body parts, there could be four sets or more.

In an example, the adjacent at least one centre body part is connected to the at least one centre body part to which the first end cap is connected and is connected to the at least one centre body part to which the second end cap is connected. An example of such a design in shown in Fig. 6 and Fig. 7. However, as shown in Fig. 7 one set of the centre body parts can be formed from three centre body parts. This set of three parallel centre body parts could however be connected to the top or bottom end flanges as shown in Fig. 7. Also, rather than one of the sets of centre body parts having three parallel centre parts, two of the sets of centre body parts can have three parallel body parts and indeed all the sets of centre body parts can have three parallel body parts.

In an example, the adjacent at least one centre body part connected to the at least one centre body part to which the first end cap is connected comprises three centre body parts laterally displaced from one another and each extending from the at least one centre body part to which the first end cap is connected to the second axial position or each extending from the at least one centre body part to which the first end cap is connected to an adjacent at least one centre body part. An example is like that shown in Fig. 7, except that there are only two sets of centre body parts rather than three sets - in other words the three parallel body parts are connected directly to the bottom end flange of Fig. 7.

In an example, the at least one centre body part to which the first end cap is connected comprises three centre body parts laterally displaced from one another and each extending from the first axial position to the second axial position or each extending from the first axial position to an axial position between the first axial position and the second axial position. Alternatively, or additionally the at least one centre body part to which the second end cap is connected comprises three centre body parts laterally displaced from one another and each extending from the second axial position to the first axial position or each extending from the second axial position to an axial position between the first axial position and the second axial position.

Thus, there can be one body part between the end caps, or two body parts between the end caps connected end to end, or three body parts between the end caps connected end to end. There can be three body parts connected between the end caps that are each in parallel to each other. There can be a single body part connected to an end cap that is itself connected to three body parts in parallel that are connected to the other end cap. There can be three body parts in parallel connected to an end cap that are connected to another three body parts in parallel that are connected to the other end cap. There can be a single body part connected to an end cap that is itself connected to three body parts in parallel that are connected to another single body part that is connected to the other end cap. There can be a single body part connected to an end cap that is itself connected another single body part that is itself connected to three body parts in parallel that are connected to the other end cap. There can be a single body part connected to an end cap that is itself connected to three body parts in parallel that are connected to another three body parts in parallel that are connected to the other end cap. There can be three body parts in parallel that are connected to an end cap that are connected to another three body parts in parallel that are connected to another three body parts in parallel that are connected to the other end cap.

In an example, the tank comprises an outer reinforcement layer 20.

In an example, the outer reinforcement layer is wrapped around at least one of the one or more centre body parts.

In an example, the outer reinforcement layer is wrapped around substantially all the or more centre body parts.

In an example, the outer reinforcement layer is wrapped around the or more centre body parts.

In an example, the outer reinforcement layer is wrapped around the first end cap.

In an example, the outer reinforcement layer is wrapped around the second end cap.

In an example, the switchgear tank comprises a third end cap, wherein the third end cap is connected to a side wall of a centre body part.

In an example, the switchgear tank comprises a third end cap, wherein the third end cap is connected to and end of a centre body part, and wherein the centre body part is connected to a side wall of a further centre body part.

In an example, the connection and volume to the vacuum interrupter devices is sealed that the bellows will stay under atmosphere outside pressure

In an example, the seal area will be connection at the bellows and seal to the surroundings that pushrod stays under gas pressure with higher dielectric performance.

The new switchgear compartment or tank is described with respect to several detailed and specific embodiments, where reference again is made to Figs. 2-8.

As described above, the main concept of the new tank design is to replace flat walls used in block or cube switchgear designs of today with rounded shape of metal enclosure created by bending and subsequent welding of thin metal sheet. Further reinforcement of such thin-walled tubular design, if required, can be done by application of an additional layer of another material wrapped around. This provides a new design of low-cost pressurized low- medium- or high-voltage gas insulated switchgear tank that can withstand required mechanical forces and at the same time be economically affordable.

The the problems associated with the existing flat wall design are mitigated by the new tank design, which uses thin metal sheet in a tubular shape, which is inexpensive to produce. As shown in Fig. 2 in the situation where the inside of the switchgear gas tank is at a higher pressure than the outside, it results in stresses in the gas tank wall. The enclosure wall stretches ever so slightly in response to the stresses. There are two principal stresses that develop in a thin-walled cylindrical pressure vessel: the axial stress; and the hoop stress. The axial and hoop stresses are also called the longitudinal and circumferential stresses, respectively. The new design has rounded shapes of walls of the gas tank that distribute the circumferential stress more evenly compared to cube design with flat walls. To optimize the new cylindrical pressure vessel further, the "caps" at both ends can be of a spherical shape or nearly spherical.

The shape of the pressurized tank used in a low, medium or high voltage switchgear uses a cylindrical design with at least partly spherical ends, see Fig.3. The example of such a cylindrical body 2 is formed by a 3...5mm thick metal plate that can withstand an internal tank pressure of 5 bar. If the "caps" are designed in a flat manner and subjected to the same internal pressure, they can need to be produced using more than a 15...25mm thick metal plate and/or require additional mechanical reinforcements in critical areas. The new design can use a partly spherical or oval design of these "caps" 3 and 4 that enables to use the same thickness of metal plate as used for the walls, without the need for additional mechanical reinforcements.

The installation of internal parts inside of the pressurized tank requires some parts of the actuating mechanism 11 or bushings 8 and 9 to penetrate through the curved wall in order that the internal parts can be operated. Because of this, flat areas 5, 6 and/or 7 are introduced to the tank, where they are preferably as small and compact as possible. Big flat areas would introduce the need for additional mechanical reinforcements.

With respect to Fig. 3, the following reference numerals apply.
1 = pressurized tank of the switchgear
2 = thin-walled cylinder
3, 4 = thin-walled end caps
5, 6, 7 = flatened parts for items penetrating the wall
8, 9 = bushings providing gas sealing and insulation between current carrying conductor and the wall
10 = actuator for switching device
11 = actuating rod
12 = switching device
13 = sealing of the actuating rod

As discussed above, there can be additional devices inside of the presurrized tank. Fig. 3 only shows the switching device 12 which can be for example a medium voltage circuit breaker or disconnector. In case the Earthing switch is required in the pressurized tank as well, it will need similar means in the tank design as the switching device 12, for example a flattened part and some sealing of the actualing rod. In case the actuator 10 is located inside of the tank, the sealing 13 is not required, but maintenance of the actuator might be more complex, as it would require depressurization of the gas tank first.

Bushings 9 can be used for cable connection into the low/medium/high-voltage network. Bushings 8 can be used as an interface with the next panel, or again for cable connection or interconnection of the busbars.

Production of such a housing 1 is done by forming a thin metal sheet into the shape of cylinder 2, with subsequent welding of both edges together. The end caps 3, 4 are made at least partly oval by e.g., pressure forming and then welded to the main cylinder.

Openings for subsequent welding of flattened parts 5, 6 or 7 can be pre-cut into the metal sheet before rounding it to the cylindrical shape but can also be done by cutting the openings bit later after the welding of cylinder 2 or caps 3, 4.

Additional internal parts can be applied inside of the gas tank, serving as mechanical stiffeners and/or as a fixation means for internal parts.

In the situation of very high mechanical forces or internal gas pressure, a carbon fibre/glass composite can be applied over the cylindrical gas tank as an additional layer 20 for mechanical reinforcement. Such layer 20 can be in a form of a tape wrapped around the gas tank, see Fig.4.

The higher stiffness of the tank required the more layers of the tape that can be used. Such a construction of the tank can be also subsequently heat treated in order to achieve good bonding and/or strength of all materials.

Such construction of the pressurized gas tank is suitable for switchgear application mainly since metallic interior wall is resistant to gases and/or electric arc inside the gas tank. Thanks to the cylindrical shape, the tank itself can be constructed as a thin walled. If needed, the additional layer used for mechanical reinforcement of the thin-walled structure can be applied on the outer perimeter of the tank.

The upper and lower endcaps 3 and 4 can be welded to the thin-walled cylinder 2, see Fig. 3, but can be also assembled having flanges 30 screwed to each other, which at the same time improves the mechanical strength of the whole pressure tank, see Fig. 5.

For further improvement of the mechanical structure around the pressure tank, the tank can be divided into more sections assembled using the flanges, see Fig. 6.

Further improvement in mechanical structure, if needed, can be realized by dividing the pressurized tanks into smaller sections, e.g., phase by phase. Fig. 7 shows an example, where middle section consists of 3 single-phase parts containing poles of the switching device. The actuator 10 can actuate all 3 phases together, or each phase could have its own actuating device.

As shown in Fig. 7 a centre body part, here one of the three parallel centre body parts, can have a further centre body part connected material to it.as shown in Fig. 8, such a laterally connected central body part can have a further end cap, meaning that that there are three or more end caps.

In this manner, the new tank design has a metallic interior wall that is resistant to gases and/or electric arc inside the gas tank. Thanks to the cylindrical shape, the tank itself can be constructed as a thin-walled tank. Introducing flanges removes the need for welding and introduces higher modularity in the switchgear gas tank design. Furthermore, it improves mechanical stiffness of the thin-walled pressurized tank. The additional layer used for mechanical reinforcement of the thin-walled structure can be applied on the outer perimeter of the tank or its portion, where such a layer can be wrapped multiple times and/or subsequently heat treated in order to improve mechanical bonding and/or stiffness of the whole assembly.

## Claims

1. A switchgear tank (1), comprising:
- one or more centre body parts (2);
- a first end cap (3); and
- a second end cap (4);
wherein the one or more centre body parts are formed from one or more bent metal sheets;
wherein the first end cap is connected to at least one centre body part of the one or more centre body parts at a first axial position;
wherein the second end cap is connected to at least one centre body part of the one or more centre body parts at a second axial position; and
wherein each of the one or more centre body parts comprises at least partly cylindrical shape.

2. Tank according to claim 1, wherein the first end cap has a partly spherical or ovoid shape; and/or wherein the second end cap has a partly spherical or ovoid shape

3. Tank according to any of claims 1-2, wherein the tank comprises one or more coupling parts (5, 6, 7), wherein the one or more coupling parts are connected to the one or more centre body parts and/or first end cap and/or second end cap, wherein each coupling part surrounds an opening in the centre body part to which it is connected or an opening in the first end cap to which it is connected or an opening in the second end cap to which it is connected.

4. Tank according to claim 3, wherein each of the one or more coupling parts comprises a flat portion.

5. Tank according to any of claims 3-4, wherein at least one of the one or more coupling parts is configured for connection to at least one bushing (8, 9); and/or wherein at least one of the one or more coupling parts is configured for connection to an actuator (10).

6. Tank according to any of claims 1-5, wherein the first end cap comprises an end flange (30), wherein the at least one centre body part to which the first end cap is connected comprises an end flange (30), and wherein the end flange of the first end cap is connected to the end flange of the at least one centre body part.

7. Tank according to any of claims 1-6, wherein the second end cap comprises an end flange (30), wherein the at least one centre body part to which the second end cap is connected comprises an end flange (30), and wherein the end flange of the second end cap is connected to the end flange of the at least one centre body part.

8. Tank according to any of claims 1-7, wherein the at least one centre body part to which the first end cap is connected is the same at least one centre body part to which the second end cap is connected.

9. Tank according to any of claims 1-7, wherein the one or more centre body parts comprises a plurality of centre body parts, wherein the at least one centre body part to which the first end cap is connected is connected to the at least one centre body part to which the second end cap is connected.

10. Tank according to claim 7, wherein the one or more centre body parts comprises a plurality of centre body parts, wherein the at least one centre body part to which the first end cap is connected comprises a second end flange at an opposite end to the of the at least one centre body part to the first end flange, and wherein the second end flange is connected to an end flange of an adjacent at least one centre body part of the one or more centre body parts, and wherein the adjacent at least one centre body part is different to the at least one centre body part to which the second end cap is connected.

11. Tank according to any of claims 7 or 10, wherein the one or more centre body parts comprises a plurality of centre body parts, wherein the at least one centre body part to which the second end cap is connected comprises a second end flange at an opposite end to the of the at least one centre body part to the first end flange, and wherein the second end flange is connected to an end flange of an adjacent at least one centre body part of the one or more centre body parts, and wherein the adjacent at least one centre body part is different to the at least one centre body part to which the first end cap is connected.

12. Tank according to any of claims 10-11, wherein the adjacent at least one centre body part is connected to the at least one centre body part to which the first end cap is connected and is connected to the at least one centre body part to which the second end cap is connected.

13. Tank according to any of claims 10-12, wherein the adjacent at least one centre body part connected to the at least one centre body part to which the first end cap is connected comprises three centre body parts laterally displaced from one another and each extending from the at least one centre body part to which the first end cap is connected to the second axial position or each extending from the at least one centre body part to which the first end cap is connected to an adjacent at least one centre body part.

14. Tank according to any of claims 1-12, wherein the at least one centre body part to which the first end cap is connected comprises three centre body parts laterally displaced from one another and each extending from the first axial position to the second axial position or each extending from the first axial position to an axial position between the first axial position and the second axial position; and/or wherein the at least one centre body part to which the second end cap is connected comprises three centre body parts laterally displaced from one another and each extending from the second axial position to the first axial position or each extending from the second axial position to an axial position between the first axial position and the second axial position.

15. Tank according to any of claims 1-14, wherein the tank comprises an outer reinforcement layer (20).

16. Tank according to any of claims 1-15, wherein the connection and volume to the vacuum interrupter devices is sealed that the bellows will stay under atmosphere outside pressure

17. Tank according to any of claims 1-16, wherein the seal area will be connection at the bellows and seal to the surroundings that pushrod stays under gas pressure with higher dielectric performance.
